# EUROPEAN PATENT APPLICATION

(11) **EP 2 626 931 A1**
(43) Date of publication of application: **14.08.2013**
(21) Application number: 12193771.8
(22) Date of filing: 22.11.2012
(51) Int. Cl.: H01M 4/36, H01M 4/38, H01M 4/48, H01M 4/50, H01M 4/52, H01M 4/62, H01M 10/052

(54) **Negative active material for rechargeable lithium battery and rechargeable lithium battery including same**

(30) Priority: 07.02.2012 US 201261596034 P; 12.07.2012 US 201213548177
(71) Applicant: Samsung SDI Co., Ltd., Yongin-si, Gyeonggi-do (KR)
(72) Inventor: KIM, Jae-Hyuk, Gyeonggi-do (KR); MOON, Sung-Hwan, Gyeonggi-do (KR); KWON, Seung-Uk, Gyeonggi-do (KR); SUH, Soon-Sung, Gyeonggi-do (KR); JEONG, Chang-Ui, Gyeonggi-do (KR); PARK, Yo-Han, Gyeonggi-do (KR); LEE, Chun-Gyoo, Gyeonggi-do (KR); YURY, Matulevich, Gyeonggi-do (KR); CHOI, Jong-Seo, Gyeonggi-do (KR)
(74) Representative: Taor, Simon Edward William

(57) **Abstract**

A negative active material for a rechargeable lithium battery includes a matrix including an Si-X based alloy, where X is not Si and is selected from alkali metals, alkaline-earth metals, Group 13 elements, Group 14 elements, Group 15 elements, Group 16 elements, transition elements, rare earth elements, or combinations thereof; silicon dispersed in the matrix; and oxygen in the negative active material, the oxygen being included at 20 at% or less based on the total number of atoms in the negative active material. A rechargeable lithium battery includes the negative active material.

## Description

This disclosure relates to a negative active material for a rechargeable lithium battery and a rechargeable lithium battery including the same.

Lithium rechargeable batteries have recently drawn attention as a power source for small portable electronic devices. They use an organic electrolyte solution and thereby, have a discharge voltage that is twice as high as that of a conventional battery using an alkali aqueous solution. Accordingly, lithium rechargeable batteries have high energy density.

Lithium-transition element composite oxides that can intercalate lithium such as LiCoO₂, LiMn₂O₄, LiNi₁₋ₓCoₓO₂ (O<x<1), and the like have been used as positive active materials for rechargeable lithium batteries.

Amorphous and crystalline carbons have been used as negative active materials for rechargeable lithium batteries. However, since carbon theoretically includes one lithium atom per six carbon atoms (LiC₆) and has a theoretical maximum capacity of 372 mAh/g, various non-carbon-based materials have been recently researched.

For example, silicon, tin, or alloys thereof are known to reversibly electrically/chemically react with lithium to form a compound rather than to intercalate lithium where lithium is inserted among layers of the active material. Accordingly, when silicon, tin, or alloys thereof are used as the negative active material (referred to as a metal-based negative active material), the negative active material has a theoretical maximum capacity of 4200mAh/g, which is much higher compared to carbon-based negative active materials.

However, because metal-based negative active materials do not intercalate lithium like carbon-based negative active materials, lithium ions are slowly diffused therein. Accordingly, when the metal-based negative active material is a bulky powder, it may cause serious cracks on the surface of the metal-based negative active layer and become pulverized during the repetitive charges and discharges. Accordingly, the increased surface area of the metal-based negative active material increasingly contacts with the electrolyte solution and reacts therewith, consuming lithium and deteriorating overall conductivity. In addition, when the negative active material is pulverized (i.e. reduced to powder), increasing the surface area, portions of the active material may go inside the cracks and bring about electrical isolation. In other words, "dead" active material may be produced. These phenomena are continually repeated with repeated cycles, deteriorating the electrode.

Accordingly, a negative active material for a rechargeable lithium battery having improved capacity and cycle-life characteristics is still desired.

Aspects of embodiments of the present invention are directed toward a negative active material for a rechargeable lithium battery having improved capacity and cycle-life characteristics.

Other aspects of embodiments of the present invention are directed toward a rechargeable lithium battery including the negative active material for a rechargeable lithium battery.

In one embodiment of the present invention, a negative active material for a rechargeable lithium battery includes a matrix including an Si-X based alloy, where X is not Si and is selected from the group consisting of alkali metals, alkaline-earth metals, Group 13 elements, Group 14 elements, Group 15 elements, Group 16 elements, transition elements, rare earth elements, and combinations thereof, and silicon dispersed in the matrix. The negative active material also includes oxygen at 20 at% or less based on the total number of atoms in the negative active material.

The Si-X-based alloy may be selected from the group consisting of Si-Co-based alloys, Si-Ni-based alloys, Si-Mn-based alloys, Si-Ti-Ni-based alloys, Si-Al-Fe-based alloys, Si-Al-Mn-based alloys, Si-Mg-Zn-based alloys, Si-Ti-Zn-based alloys, and combinations thereof.

The oxygen in the negative active material may be included at 15 at% or less based on the total number of atoms in the negative active material. In some embodiments, the oxygen in the negative active material is included at 10 at% or less based on the total number of atoms in the negative active material.

The negative active material may have an average particle diameter of 1 µm to 8 µm. The negative active material may have a specific surface area of 1 m²/g to 8 m²/g. The negative active material may have a specific surface area of 1 m²/g to 4 m²/g.

The negative active material may further include a carbon-based material. The carbon-based material may be crystalline carbon materials, amorphous carbon materials, or combinations thereof. The carbon-based material may be included at 30 wt% to 99 wt% based on the total weight of the negative active material.

In one embodiment of the present invention, a rechargeable lithium battery includes a negative active material for a rechargeable lithium battery includes a matrix including an Si-X based alloy, where X is not Si and is selected from the group consisting of alkali metals, alkaline-earth metals, Group 13 elements, Group 14 elements, Group 15 elements, Group 16 elements, transition elements, rare earth elements, and combinations thereof, and silicon dispersed in the matrix. The negative active material also includes oxygen at 20 at% or less based on the total number of atoms in the negative active material

In one embodiment of the present invention, a method of forming a negative active material for a rechargeable lithium battery includes providing a starting material including a matrix, including a Si-X based alloy, and Si dispersed in the matrix, where X is not Si and is selected from the group consisting of alkali metals, alkaline-earth metals, Group 13 elements, Group 14 elements, Group 15 elements, Group 16 elements, transition elements, rare earth elements, and combinations thereof; grinding the starting material; and controlling the grinding of the starting material to add oxygen to form the negative active material, where oxygen is included in the in the negative active material at 20 at% or less based on the total number of atoms in the negative active material.

The grinding may include a process selected from the group consisting of dry ball mill processes, wet ball mill processes, paint shaker processes, attrition mill processes, air jet mill processes, planetary mill processes, and combinations thereof. The controlling of the grinding may include dry ball mill processing for 1 minute to 200 hours; wet ball mill processing for 1 minute to 40 hours; paint shaker processing for 1 minute to 2 hours; or attrition mill, air jet mill, or planetary mill processing for 1 minute to 200 hours.

According to a first aspect of the invention, there is provided a negative active material for a rechargeable lithium battery, comprising: particles that include a matrix comprising an Si-X based alloy, where X is not Si and is selected from the group consisting of alkali metals, alkaline-earth metals, Group 13 elements, Group 14 elements, Group 15 elements, Group 16 elements, transition elements, rare earth elements, and combinations thereof, and silicon dispersed in the matrix; wherein the particles further include an oxide of silicon or an oxide of X, and the particles include oxygen at 20 at% or less based on the total number of atoms in the particles.

In some embodiments, X is selected from the group consisting of Co, Ni, Mn, Ti, Al, Fe, Mg, and Zn.

In some embodiments, the Si-X-based alloy is selected from the group consisting of Si-Co-based alloys, Si-Ni-based alloys, Si-Mn-based alloys, Si-Ti-Ni-based alloys, Si-Al-Fe-based alloys, Si-Al-Mn-based alloys, Si-Mg-Zn-based alloys, Si-Ti-Zn-based alloys, and combinations thereof.

In some embodiments, the particles include oxygen at 15 at% or less based on the total number of atoms in the particles. In some embodiments the particles include oxygen at 10 at% or less based on the total number of atoms in the negative active material. In some embodiments, the particles include oxygen at 5 at% or less based on the total number of atoms in the particles.

In some embodiments, the particles have an average particle diameter of 1 µm to 8 µm. In some embodiments, the particles have an average particle diameter of 1 µm to 6 µm. In some embodiments, the particles have an average particle diameter of 1 µm to 4 µm.

In some embodiments, the particles have a specific surface area of 1 m²/g to 8 m²/g. In some embodiments, the particles have a specific surface area of 1 m²/g to 5 m²/g. In some embodiments, the particles have a specific surface area of 1 m²/g to 4 m²/g. In some embodiments, the particles have a specific surface area of 1 m²/g to 3 m²/g.

In some embodiments, the negative active material further includes a carbon-based material. In some embodiments, the carbon-based material is a crystalline carbon material, an amorphous carbon material, or a combination thereof.

In some embodiments, the carbon-based material is included at 30 wt% to 99 wt% based on the total weight of the negative active material. In some embodiments, the carbon-based material is included at 50 wt% to 99 wt% based on the total weight of the negative active material.

According to a second aspect of the invention, there is provided rechargeable lithium battery comprising a negative electrode including a negative active material according to the first aspect of the invention.

According to a third aspect of the invention, there is provided a method of forming a negative active material for a rechargeable lithium battery, the method comprising: providing a starting material comprising a matrix including an Si-X based alloy, where X is not Si and is selected from the group consisting of alkali metals, alkaline-earth metals, Group 13 elements, Group 14 elements, Group 15 elements, Group 16 elements, transition elements, rare earth elements, and combinations thereof, and silicon dispersed in the matrix; grinding the starting material into particles, wherein the grinding of the starting material oxidises a portion of the silicon or X in the particles; wherein the particles include oxygen at 20 at% or less based on the total number of atoms in the particles.

Hence, in such an aspect, the grinding of the starting material into particles is such that after grinding the particles include oxygen at 20 at% or less based on the total number of atoms in the particles.

In some embodiments, the grinding includes a process selected from the group consisting of dry ball mill processes, wet ball mill processes, paint shaker processes, attrition mill processes, air jet mill processes, planetary mill processes, and combinations thereof.

In some embodiments, the grinding includes one of dry ball mill processing for 1 minute to 200 hours; wet ball mill processing for 1 minute to 40 hours; paint shaker processing for 1 minute to 2 hours; or attrition mill, air jet mill, or planetary mill processing for 1 minute to 200 hours.

In embodiments of the invention, grinding containers are of different size may be used, and each grinding container has an optimum rotational speed (rpm) for optimum grinding performance. For example, a grinding container of a large size has a large weight of material and a high rpm, thus, the material can be ground during a short grinding time.

The features and aspects of embodiments of the present invention will be more apparent from the following detailed description in conjunction with the accompanying drawings.
FIG. 1 is the schematic view of a rechargeable lithium battery according to one embodiment.
FIG. 2 is the SEM (scanning electron microscope) photograph of a negative active material for a rechargeable lithium battery according to Example 1.
FIG. 3 is the SEM photograph of a negative active material for a rechargeable lithium battery according to Example 2.
FIG. 4 is the SEM photograph of a negative active material for a rechargeable lithium battery according to Example 3.
FIG. 5 is the SEM photograph of a negative active material for a rechargeable lithium battery according to Example 4.
FIG. 6 is the SEM photograph of a negative active material for a rechargeable lithium battery according to Example 6.
FIG. 7 is the SEM photograph of a negative active material for a rechargeable lithium battery according to Example 7.
FIG. 8 is the SEM photograph of a negative active material for a rechargeable lithium battery according to Example 8.
FIG. 9 is the SEM photograph of a negative active material for a rechargeable lithium battery according to Comparative Example 1.
FIG. 10 is a schematic illustration of a particle that includes a matrix comprising an SiX based alloy, where X is not Si, and silicon dispersed in the matrix.

Exemplary embodiments of this disclosure will hereinafter be described in detail. However, these embodiments are only exemplary, and this disclosure is not limited thereto.

In the drawings, the thickness of layers, films, panels, regions, etc., may be exaggerated for clarity. Like reference numerals designate like elements throughout the specification.

It will be understood that when an element such as a layer, film, region, or substrate is referred to as being "on" another element, it can be directly on the other element or intervening elements may also be present. In contrast, when an element is referred to as being "directly on" another element, there are no intervening elements present.

According to one embodiment, the negative active material for a rechargeable lithium battery includes a matrix including a Si-X-based alloy (where X is not Si and is an alkali metal, an alkaline-earth metal, a Group 13 element, a Group 14 element, a Group 15 element, a Group 16 element, a transition element, a rare earth element, or a combination thereof), and silicon (Si) dispersed in the matrix. Oxygen (O) is also included in the negative active material at 20 at% or less based on the total number of atoms in the negative active material. The oxygen is formed through the oxidation of Si. For example, in some embodiments, the oxygen may be included at 15 at% or less based on the total number of atoms of the negative active material.

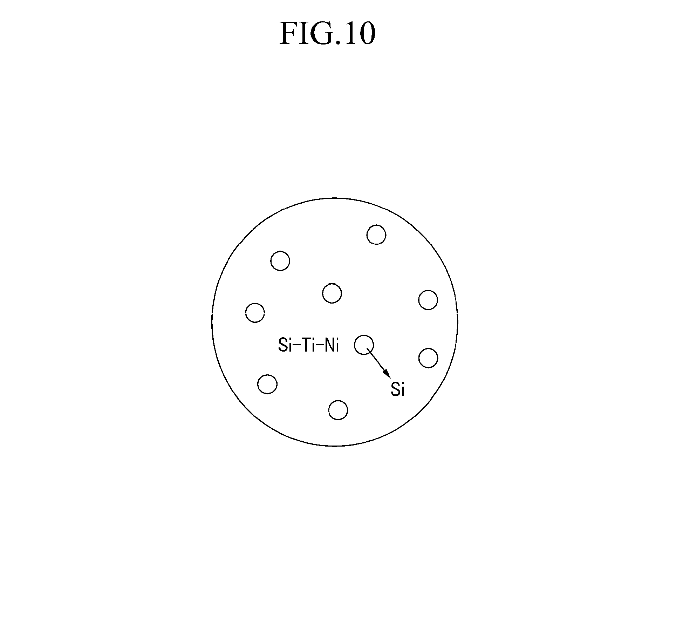

Fig. 10 shows schematic illustration of a particle that includes a matrix comprising an Si-X based alloy, where X is not Si and is selected from the group consisting of alkali metals, alkaline-earth metals, Group 13 elements, Group 14 elements, Group 15 elements, Group 16 elements, transition elements, rare earth elements, and combinations thereof, and silicon dispersed in the matrix. As shown in Fig. 10, the matrix includes a Si-X based alloy (for example, Si-Ti-Ni) and Si dispersed in the matrix. That is, particles of Si are dispersed in the matrix of Si-Ti-Ni.

The matrix may prevent or reduce pulverization of the negative active material by buffering the negative active material, reducing the effect of the volume change of Si during the charge and discharge of a lithium rechargeable battery.

The Si-X-based alloy may be selected from the group consisting of Si-Co-based alloys, Si-Ni-based alloys, Si-Mn-based alloys, Si-Ti-Ni-based alloys, Si-Al-Fe-based alloys, Si-Al-Mn-based alloys, Si-Mg-Zn-based alloys, Si-Ti-Zn-based alloys, and combinations thereof, but embodiments of the present invention are not limited thereto.

The negative active material may be prepared in the following method.

In some embodiments of the invention, about 1 µm to about 50 µm-thick and about 0.5 mm to about 500 mm-wide ribbon-shaped structure including a Si-X-based alloy (where X is not Si and is an alkali metal, an alkaline-earth metal, a Group 13 element, a Group 14 element, a Group 15 element, a Group 16 element, a transition element, a rare earth element, or a combination thereof), and Si dispersed in the Si-X-based alloy, can be prepared through a melting/spinning process. The structure can then be ground using a dry or wet method or a combination thereof using a ball mill, a paint shaker, an attrition mill, an air jet mill, a planetary mill, or a combination thereof for a set or predetermined time. For example, in some embodiments, the ribbon structure may be ground for about 1 minute to about 200 hours to prepare the negative active material. However, the structure of embodiments of the present invention is not limited thereto.

The oxygen atoms are included in the form of SiO₂, which is formed through the oxidation of Si. As more oxygen is included, more SiO₂ is included in the negative active material. The SiO₂ forms a compound with Li during the charge and discharge of a lithium rechargeable battery, thereby increasing the irreversible capacity of the battery, thereby deteriorating the capacity and charge and discharge efficiency of the rechargeable lithium battery.

In some embodiments of the invention the negative active material includes oxygen (O) atoms at about 20 at% or less based on the entire amount of atoms included in the negative active material and thus, SiO₂ is included in a relatively small amount. Accordingly, the negative active material may prevent or reduce the deterioration of the capacity and charge and discharge efficiency of the battery. Accordingly, the capacity and cycle-life characteristics of a rechargeable lithium battery according to embodiments of the present invention are improved. In some embodiments, oxygen is included at about 15 at% or less based on the total number of atoms in the negative active material. In other embodiments, oxygen is included at about o at% to about 10 at% based on the total number of atoms in the negative active material. In still other embodiments, oxygen is included at about o at% to about 5 at% based on the total number of atoms in the negative active material.

The amount of oxygen (O) atoms may be adjusted depending on the aforementioned grinding conditions for preparing a negative active material. In other words, the amount of oxygen atoms may vary depending on the type of grinding used (wet, dry, ball mill, paint shaker, etc.) and the amount of grinding used (i.e. the grinding time).

According to one embodiment, the ribbon structure may be ground using a dry method using a ball mill for about 1 minute to about 200 hours to prepare a negative active material including oxygen at about 20 atom% or less based on the total number of atoms in the negative active material. According to another embodiment, the structure may be ground in a wet method using a ball mill for about 1 minute to about 40 hours to prepare a negative active material including oxygen at about 20 atom% or less based on the total number of atoms in the negative active material. According to still another embodiment, the structure may be ground in a dry or wet method or a combination thereof using a paint shaker for about 1 minute to about 2 hours to prepare a negative active material including oxygen at about 20 atom% or less based on the total number of atoms in the negative active material. According to yet another embodiment, the structure may be ground in a dry or wet method or a combination thereof using a attrition mill, an air jet mill, a planetary mill, or a combination thereof for about 1 minute to about 200 hours to prepare a negative active material including oxygen at about 20 atom% or less based on the total number of atoms in the negative active material.

In embodiments of the invention, grinding containers are of different size may be used, and each grinding container has an optimum rotational speed (rpm) for optimum grinding performance. For example, a grinding container of a large size has a large weight of material and a high rpm, thus, the material can be ground during a short grinding time.

The negative active material may have an average particle diameter (D50) of about 1 µm to about 8 µm. In embodiments of the present invention, when the negative active material has an average particle diameter within the range, it maintains a specific surface area within an appropriate range and prevents or reduces the oxidation of Si therein and thus, effectively improves charge and discharge efficiency. That is, charge and discharge efficiency are improved by adjusting the electrical conductive path for lithium ions to have an appropriate length by preventing or reducing the formation of SiO₂. In some embodiments, the negative active material may have an average particle diameter (D50) of about 1 µm to about 6 µm. In still other embodiments, the negative active material may have an average particle diameter (D50) of about 1 µm to about 4 µm.

The negative active material may have a specific surface area of from about 1 m²/g to about 5 m²/g. In embodiments of the present invention, when the negative active material has a specific surface area within the range, lithium ions are more effectively transported and furthermore, less of the lithium ions are consumed to form an initial SEI (solid electrolyte interphase), effectively preventing or reducing the oxidation of Si therein. Accordingly, a rechargeable lithium battery including the negative active material may have improved capacity and cycle-life characteristics. In some embodiments, the negative active material may have a specific surface area of about 1 m²/g to about 4 m²/g. In other embodiments, the negative active material may have a specific surface area of about 1 m²/g to about 3 m²/g.

The negative active material may further include a carbon-based material. Herein, the carbon-based material may improve the conductivity and cycle-life characteristics of the negative active material.

The carbon-based material may be any carbon-based negative active material generally-used in a lithium ion rechargeable battery. Examples of the carbon-based material include crystalline carbon, amorphous carbon, or a combination thereof. The crystalline carbon may be non-shaped, or sheet, flake, spherical, or fiber shaped natural or artificial graphite. The amorphous carbon may be a soft carbon (carbon obtained by sintering at a low temperature), a hard carbon (carbon obtained by sintering at a high temperature), carbonized mesophase pitch, fired coke, or the like.

The negative active material may include about 1 wt% to about 99 wt% of the carbon-based material based on the total weight of the negative active material (including the carbon-based material). In embodiments of the present invention, when the carbon-based material is included within this range, it effectively improves the conductivity and cycle-life characteristics of the negative active material. In some embodiments, the carbon-based material may be included in at about 30 wt% to about 99 wt% based on the weight of the negative active material. In other embodiments, the carbon-based material may be included at about 50 wt% to about 99 wt% based on the total weight of the negative active material.

The rechargeable lithium battery according to another embodiment includes a negative electrode including the negative active material, a positive electrode, and an electrolyte.

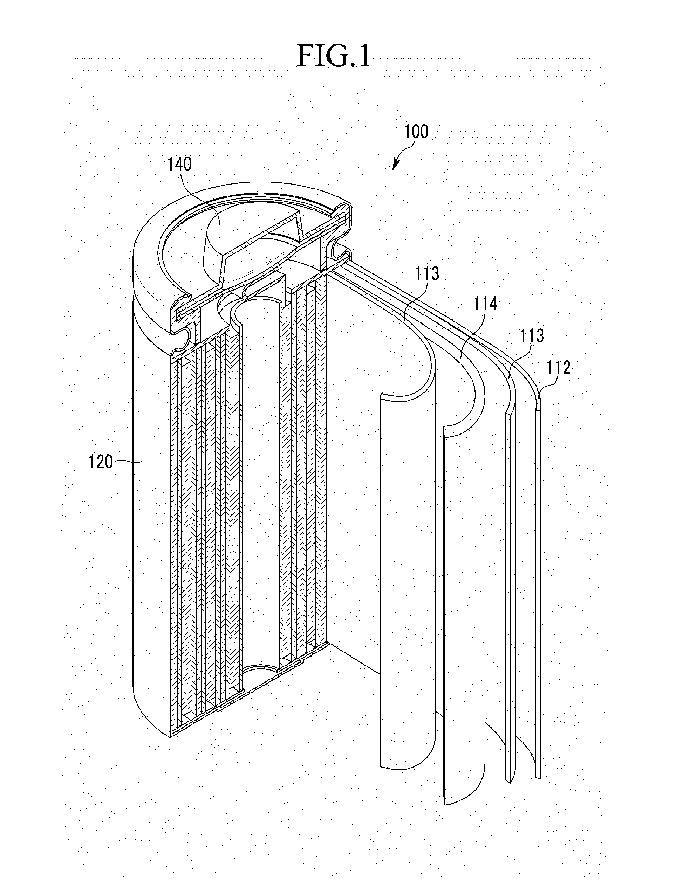

FIG. 1 is the schematic view of a rechargeable lithium battery according to one embodiment.

FIG. 1 shows a cylindrical rechargeable lithium battery, but embodiments of the present invention are not limited thereto. That is, the rechargeable lithium battery could have various shapes, such as a prism shape, a coin shape, a pouch shape, or the like.

Referring to FIG. 1, a rechargeable lithium battery 100 according to one embodiment includes a positive electrode 114; a negative electrode 112 facing the positive electrode 114; and a separator 113 interposed between the positive electrode 114 and negative electrode 112. The positive electrode 114, negative electrode 112, and separator 113 are placed in a battery case 120. An electrolyte is placed therein and impregnates the positive electrode 114, negative electrode 112, and separator 113. A sealing member 140 seals an opening at one end of the battery case 120.

The negative electrode 112 includes a negative active material layer including the negative active material according to one embodiment and a current collector supporting the negative active material layer.

The negative active material layer may include a negative active material at about 15 wt% to about 99 wt% based on the entire weight of the negative active material layer.

The negative active material layer may include a binder and optionally, a conductive material. The binder may be included at about 1 wt% to about 10 wt% based on the total weight of the negative active material layer. In other embodiments, the binder may be included at about 1 wt% to about 5 wt% based on the total weight of the negative active material layer.

In addition, when the negative active material layer includes a conductive material, it may include a negative active material at about 80 wt% to about 98 wt%, a binder at about 1 wt% to about 10 wt%, and a conductive material at about 1 wt% to about 10 wt% based on the total weight of the negative active material layer. In some embodiments, the negative active material layer includes the negative active material at about 90 wt% to about 98 wt%, a binder at about 1 wt% to about 5 wt%, and a conductive material at about 1 wt% to about 5 wt%.

The binder improves binding properties of the negative active material particles to one another and to a current collector. Examples of the binder may include polyvinylalcohol, carboxylmethylcellulose (CMC), hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride (PVdF), polyethylene, polypropylene, polyamideimide (PAI), a styrene-butadiene rubber (SBR), an acrylated styrene-butadiene rubber, an epoxy resin, nylon, or the like, but embodiments of the present invention are not limited thereto.

The conductive material is used to improve conductivity of an electrode. Any electrically conductive material may be used as a conductive material unless it causes a chemical change. Examples of the conductive material include a carbon-based material such as natural graphite, artificial graphite, carbon black (for example, SUPER P carbon black), acetylene black, Ketjen black, carbon fiber, or the like; a metal-based material such as a metal powder or a metal fiber including copper, nickel, aluminum, silver, or the like; a conductive polymer such as a polyphenylene derivative; or a mixture thereof.

The negative current collector may be a copper foil, a nickel foil, a stainless steel foil, a titanium foil, a nickel foam, a copper foam, a polymer substrate coated with a conductive metal, or a combination thereof.

The positive electrode 114 includes a positive current collector and a positive active material layer disposed on the positive current collector. The positive active material includes a lithiated intercalation compound that reversibly intercalates and deintercalates lithium ions.

The positive active material may include one or more oxides of a transition element or composite oxides of a transition element and lithium, but embodiments of the present invention are not limited thereto.

In some embodiments, the positive active material may include one or more oxides of a metal such as cobalt, iron, manganese, nickel, molybdenum, or a combination thereof or composite oxides of lithium and a metal such as cobalt, iron, manganese, nickel, molybdenum, or a combination thereof. However, any suitable positive active material may be used.

For example, the positive active material may include an oxide of a metal such as cobalt, iron, manganese, nickel, molybdenum, or a combination thereof that does not include lithium. According to one embodiment, a negative active material for a rechargeable lithium battery includes sufficient lithium to allow the effective operation of a rechargeable lithium battery even though the positive active material does not include lithium.

In more particular, the positive active material may include a compound represented by one of the following formulas:

LiₐA_{1-b}X_{b}D₂ (0.90 ≤ a ≤ 1.8, 0 ≤ b ≤ 0.5), LiₐE_{1-b}X_{b}O_{2-c}D_{c} (0.90 ≤ a ≤ 1.8, 0 ≤ b ≤ 0.5, 0 ≤ c ≤ 0.05), LiE_{2-b}X_{b}D₄ (0 ≤ b ≤ 0.5), LiE_{2-b}X_{b}O_{4-c}D_{c} (0 ≤ b ≤ 0.5, 0 ≤ c ≤ 0.05), LiₐNi_{1-b-c}Co_{b}X_{c}D_{α} (0.90 ≤ a ≤ 1.8, 0 ≤ b ≤ 0.5, 0 ≤ c ≤ 0.05, 0 < α ≤ 2), LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2), LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2), LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2), LiₐNi_{1-b-c}Mn_{b}X_{c}O_{2-α}Tₐ (0.90 ≤ a ≤ 1.8, 0 ≤ b ≤ 0.5, 0 ≤ c ≤ 0.05, 0 < α < 2), LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2), LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1), LiₐNi_{b}CO_{c}Mn_{d}GeO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1), LiₐNiG_{b}O₂ (0.90 ≤ a ≤ 1.8, 0.001 ≤ b ≤ 0.1), LiₐCoG_{b}O₂ (0.90 ≤ a ≤ 1.8, 0.001 ≤ b ≤ 0.1), LiₐMnG_{b}O₂ (0.90 ≤ a ≤ 1.8, 0.001 ≤ b ≤ 0.1), LiₐMn₂G_{b}O₄ (0.90 ≤ a ≤ 1.8, 0.001 ≤ b ≤ 0.1), QOₖ (1 ≤ k ≤ 3), QS_{w} (1 ≤ w ≤ 3), LiQS₂, V₂O₅, LiV₂O₅, LiIO₂, LiNiVO₄, Li₍₃-_{f)}J₂(PO₄)₃ (0 ≤ f ≤ 2), Li_{(3-f)}Fe₂(PO₄)₃ (0 ≤ f ≤ 2), or LiFePO₄.

In the above Chemical Formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Co, Mo, Mn, or a combination thereof; I is Cr, V, Fe, Sc, Y, or a combination thereof; and J is V, Cr, Mn, Co, Ni, Cu, or a combination thereof.

The above compounds may have a coating layer on their surface or may be mixed with another compound having a coating layer.

The coating layer may include at least one coating element compound such as an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed using a method that does not have an adverse influence on the properties of a positive active material. For example, the method may include any suitable coating method such as spray coating, dipping, or the like. However, as these methods are generally known to those of ordinary skill in the art, they will not be described in more detail.

The positive active material layer may include a binder and optionally a conductive material.

The binder improves binding properties of the positive active material particles to one another and to a current collector. Examples of the binder include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride (PVdF), polyethylene, polypropylene, a styrene-butadiene rubber, an acrylated styrene-butadiene rubber, an epoxy resin, nylon, or the like, but embodiments of the present invention are not limited thereto.

The conductive material is used to provide an electrode with conductivity. The conductive material may include any electronic conductive material as long as it does not cause a chemical change. For example, the conductive material may be a carbon-based material such as natural graphite, artificial graphite, carbon black (for example, SUPER P carbon black), acetylene black, Ketjen black, a carbon fiber, or the like; a metal-based material such as a metal powder or a metal fiber of copper, nickel, aluminum, silver, or the like; a conductive polymer material of a polyphenylene derivative; or a mixture thereof.

The positive current collector may include aluminum (Al) but embodiments of the present invention are not limited thereto.

The negative electrode 112 and the positive electrode 114 may each be fabricated by mixing the active material, the conductive material, and the binder to prepare an active material slurry and coating the active material slurry on a current collector, respectively. Electrode-manufacturing methods are well known to those of ordinary skill in the art, and thus they will not be described in more detail. The solvent may include N-methylpyrrolidone, pure water (deionized water), or the like but embodiments of the present invention are not limited thereto.

In the rechargeable lithium battery according to one embodiment, an electrolyte may include a non-aqueous organic solvent and a lithium salt without limitation. However, a lithium salt may not be included. That is, according to one embodiment, a negative active material for a rechargeable lithium battery includes sufficient lithium to allow effective operation of a rechargeable lithium battery, even though the electrolyte does not include a lithium salt.

The non-aqueous organic solvent plays a role of transmitting ions taking part in the electrochemical reaction of a battery.

The non-aqueous organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone or the like. The alcohol-based solvent may include ethanol, isopropyl alcohol, or the like. The aprotic solvent may include nitriles such as R-CN (wherein R is a C2 to C20 linear, branched, or cyclic hydrocarbon group and may include a double bond, an aromatic ring, or an ether bond), amides such as dimethylformamide, dimethylacetamide, dioxolanes such as 1,3-dioxolane, sulfolanes, or the like.

The non-aqueous organic solvent may be used singularly or in a mixture. When the organic solvent is used in a mixture, its mixture ratio can be controlled in accordance with a desired performance as is known to those of ordinary skill in the art.

The carbonate-based solvent may include a mixture of a cyclic carbonate and a linear carbonate. The cyclic carbonate and the linear carbonate may be mixed together in a volume ratio of about 1:1 to about 1:20. In some embodiments, the cyclic carbonate and the linear carbonate may be mixed together in a volume ratio of about 1:1 to about 1:15, and in other embodiments, the cyclic carbonate and the linear carbonate may be mixed together in a volume ratio of about 1:1 to about 1:9. According to embodiments of the invention, when a mixture of a cyclic carbonate and a linear carbonate are included within the above ranges, the electrolyte may have enhanced performance.

The electrolyte of some embodiments of the present invention may be prepared by further adding an aromatic hydrocarbon-based solvent to the carbonate-based solvent. The carbonate-based solvent and the aromatic hydrocarbon-based solvent are mixed together in a volume ratio of about 1 : 1 to about 30 : 1.

The aromatic hydrocarbon-based organic solvent may be an aromatic hydrocarbon-based compound represented by the following Chemical Formula 1.

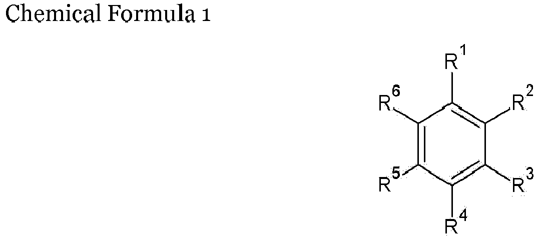

In Chemical Formula 1, R1 to R6 are each independently hydrogen, a halogen, a C1 to C10 alkyl group, a C1 to C10 haloalkyl group, or a combination thereof.

The aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The non-aqueous electrolyte may further include vinylene carbonate or an ethylene carbonate-based compound represented by the following Chemical Formula 2 in order to improve cycle-life of a battery.

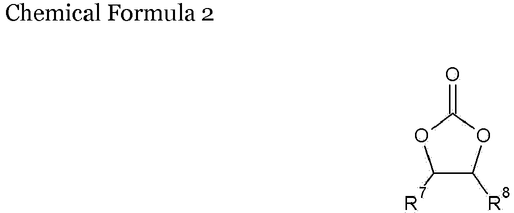

In Chemical Formula 2, R⁷ and R⁸ are the same or different and are each hydrogen, a halogen, a cyano group (CN), a nitro group (NO₂), or a fluorinated C1 to C5 alkyl group, provided that at least one of R⁷ and R⁸ is a halogen, a cyano group (CN), a nitro group (NO₂), or a fluorinated C1 to C5 alkyl group. That is, both of R⁷ and R⁸ are not hydrogen.

The ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. The amount of ethylene carbonate-based compound used may be adjusted within an appropriate range in order to improve cycle-life as would be known by those of ordinary skill in the art.

The lithium salt dissolved in the organic solvent supplies lithium ions in a battery, basically operates a rechargeable lithium battery, and improves lithium ion transportation between positive and negative electrodes. The lithium salt may include one or more supporting electrolytic salt such as LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, or LiB(C₂O₄)₂ (lithium bisoxalato borate; LiBOB). The lithium salt may be used in a concentration of about 0.1 M to about 2.0 M. In embodiments of the present invention, when the lithium salt is included within the above concentration range, electrolyte performance and lithium ion mobility is enhanced due to optimal electrolyte conductivity and viscosity.

The separator 113 separates the negative electrode 112 and the positive electrode 114 and allows lithium ions to pass therebetween. The separator may be any separator commonly used in a lithium rechargeable battery. In other words, the separator may have low resistance against ion movement in an electrolyte and excellent moisturizing capability for the electrolyte solution. For example, the separator may be glass fiber, polyester, TEFLON (tetrafluoroethylene), polyethylene, polypropylene, polytetrafluoroethylene (PTFE), or a combination thereof. Furthermore, the separator may be a non-woven fabric or a cloth. For example, a lithium ion battery may include a polyolefin-based polymer separator such as polyethylene, polypropylene, or the like. Additionally, the separator could be coated with a ceramic component or a polymer material to improve heat resistance or mechanical strength thereof. The separator may be a single layer or may include multi-layers.

The lithium secondary battery may be classified as a lithium ion battery, a lithium ion polymer battery, or a lithium polymer battery according to the type of separator and electrolyte used therein. Rechargeable lithium batteries may have a variety of shapes and sizes including cylindrical shapes, prismatic shapes, coin shapes, or pouch shapes. In addition, the rechargeable lithium batteries may be thin film batteries, or may be rather bulky in size. Structures and fabrication methods for these batteries are known to those of ordinary skill in the art.

The following examples illustrate embodiments of the present invention in more detail. These examples, however, should not in any sense be interpreted as limiting the scope of the present invention.

### Preparation of negative active material

### Example 1

A 12 µm thick and 1 mm wide ribbon-shaped structure including a Si-Ti-Ni-based alloy and Si was prepared through a melting and spinning process. A negative active material was then prepared by grinding the structure by using a ball mill. The ball mill was a Wisemix made by Wisd.

First, the 12 µm thick and 1 mm wide ribbon-shaped structure including a Si-Ti-Ni-based alloy and Si and one or more zirconia balls with a diameter of 5 mm were put in a grinding container at a weight ratio of 50:1. The ribbon-shaped structure and the one or more zirconia balls were filled up to about half of the grinding container.

Next, the grinding container was spun at a speed of 100 rpm for 24 hours to grind the ribbon-shaped structure in a dry grinding method, preparing a negative active material.

When measured after grinding, the negative active material included oxygen atoms at 3.33 at% with respect to the total number of atoms in the negative active material. The negative active material had an average particle diameter (D50) of 4.155 µm and a specific surface area of 1.6853 m²/g.

### Example 2

A negative active material was prepared in a similar method as Example 1 except that the grinding was performed for 104 hours.

When measured after grinding, the negative active material included oxygen atoms at 8.39 at% with respect to the total number of atoms in the negative active material. The negative active material had an average particle diameter (D50) of 3.446 µm and a specific surface area of 4.6185 m²/g.

### Example 3

A 12 µm thick and 1 mm wide ribbon-shaped structure including a Si-Ti-Ni-based alloy and Si was prepared through a melting and spinning process. A negative active material was then prepared by grinding the structure by using a ball mill.

First, the 12 µm-thick and 1 mm-wide ribbon-shaped structure including a Si-Ti-Ni-based alloy and Si and one or more zirconia balls with a diameter of 5 mm were put in a grinding container at a weight ratio of 50:0. The ribbon-shaped structure and the one or more zirconia balls were filled up to about half the volume of the grinding container.

Then, ethanol was added to the grinding container until the ethanol was filled up to about 70 vol% of the grinding container.

The grinding container was spun at a speed of 100 rpm for 8 hours to grind the ribbon-shaped structure in a wet grinding method, thereby preparing a negative active material.

When measured after grinding, the negative active material included oxygen atoms at 12.32 at% with respect to the negative active material. The negative active material had an average particle diameter (D50) of 4.781 µm and a specific surface area of 2.6781 m²/g.

### Example 4

A 12 µm thick and 1 mm wide ribbon-shaped structure including a Si-Ti-Ni-based alloy and Si was prepared through a melting and spinning process. A negative active material was then prepared by first grinding the structure to have a diameter of from 500 µm to 1000 µm, and then by grinding the resultant active material using an air jet mill.

A negative active material for a rechargeable lithium battery was prepared by first grinding the 12 µm -thick and 1 mm-wide ribbon-shaped structure including a Si-Ti-Ni-based alloy and Si to have a diameter ranging from 500 µm to 1000 µm. The resultant particles were then ground by using an air jet mill.

The primary grinding was performed by using a crusher or a roller mill. The air jet mill used in the secondary grinding was HKJ-200 made by HANKOOK Crusher Co., Ltd. The powder including the Si-Ti-Ni-based alloy and Si having a diameter ranging from 500 µm to 1000 µm was fed into the grinding container of the air jet mill at a speed of 0.7g/min, thereby preparing a negative active material.

When measured after grinding, the negative active material included oxygen atoms at 1.43 at% with respect to the total number of atoms in the negative active material. The negative active material had an average particle diameter (D50) of 4.938 µm and a specific surface area of 2.4239 m²/g.

### Example 5

A 12 µm thick and 1 mm wide ribbon-shaped structure including a Si-Ti-Ni-based alloy and Si was prepared through a melting and spinning process. A negative active material was then prepared by grinding the structure by using a planetary mill. The grinding was performed by using a PULVERISETTE 5 planetary mill made by FRITSCH.

First, a 12 µm thick and 1 mm wide ribbon-shaped structure including a Si-Ti-Ni-based alloy and Si and one or more zirconia balls with a diameter of 3 mm were put in a grinding container at a weight ratio of 20:1. The ribbon-shaped structure and the zirconia ball were filed up to about 30 vol% of the grinding container.

Next, the grinding container was spun at a speed of 200 rpm for 30 minutes to grind the ribbon-shaped structure, thereby preparing a negative active material.

When measured after grinding, the negative active material included oxygen atoms at 3.57 at% with respect to the total number of atoms in the negative active material. The negative active material had an average particle diameter (D50) of 5.860 µm and a specific surface area of 2.4532 m²/g.

### Example 6

A negative active material was prepared according to the same method as Example 5 except for grinding a ribbon-shaped structure for 180 minutes.

When measured after grinding, the negative active material included oxygen atoms in an amount of 5.73 atom% and had an average particle diameter (D50) of 4.580 µm and a specific surface area of 2.8392 m²/g.

### Example 7

A 12 µm thick and 1 mm wide ribbon-shaped structure including a Si-Ti-Ni-based alloy and Si was prepared through a melting and spinning process. A negative active material was then prepared by grinding the structure by using a ball mill.

First, a 12 µm-thick and 1 mm-wide ribbon-shaped structure including a Si-Ti-Ni-based alloy and Si and one or more zirconia balls with a diameter of 5 mm were filled in a grinding container at a weight ratio of 50:1. The ribbon-shaped structure and the one or more zirconia balls with a diameter of 5 mm were filled up to about a half the volume of the grinding container.

Next, ethanol was added to the grinding container so that the grinding container was filled with ethanol up to about 70 vol%.

Then, the grinding container was spun at a speed of 100 rpm for 45 minutes to grind the ribbon-shaped structure in a wet method, thereby preparing a negative active material.

When measured after grinding, the negative active material included oxygen atoms at 17.29 at% with respect to the negative active material. The negative active material had an average particle diameter (D50) of 2.192 µm and a specific surface area of 4.5423 m²/g.

### Example 8

A 12 µm-thick and 1 mm-wide ribbon-shaped structure including a Si-Ti-Ni-based alloy and Si was prepared through a melting and spinning process. A negative active material was then prepared by grinding the structure by using a paint shaker. The paint shaker was JY-40B made by Fast Shaker.

First, a 12 µm thick and 1 mm wide ribbon-shaped structure including a Si-Ti-Ni-based alloy and Si and one or more zirconia balls with a diameter of 5 mm were put in a grinding container at a weight ratio of 50:1. The ribbon-shaped structure and the zirconia ball with a diameter of 5 mm were filled up to about a half the volume of the grinding container.

Then, ethanol was added to the grinding container so that the grinding container was filled with ethanol up to about 70 vol%.

Next, the grinding container was vibrated at 550 a frequency of t/min (periods per minute) for 3 hours to grind the ribbon structure in a wet grinding method, thereby preparing a negative active material.

When measured after grinding, the negative active material included oxygen atoms at 19.43 at% based on the total number of atoms in the negative active material. The negative active material had an average particle diameter (D50) of 2.615 µm and a specific surface area of 7.2583 m²/g.

### Comparative Example 1

A 12 µm thick and 1 mm wide ribbon-shaped structure including a Si-Ti-Ni-based alloy and Si was prepared through a melting and spinning process. A negative active material was then prepared by grinding the structure by using a paint shaker. The paint shaker was JY-40B made by Fast Shaker.

First, a 12 µm-thick and 1 mm-wide ribbon-shaped structure including a Si-Ti-Ni-based alloy and Si and one or more zirconia balls with a diameter of 5 mm were put in a grinding container at a weight ratio of 50:1. The ribbon-shaped structure and the one or more zirconia balls with a diameter of 5 mm were filled up to about half the volume of the grinding container.

Next, the grinding container was vibrated at a frequency of 550 t/min (periods per minute) for 3 hours to grind the ribbon-shaped structure in a dry grinding method, thereby preparing a negative active material.

When measured after grinding, the negative active material included oxygen atoms at 24.23 at% based on the total number of atoms. The negative active material had an average particle diameter (D50) of 2.587 µm and a specific surface area of 6.4239 m²/g.

### Fabrication of rechargeable lithium battery cell

### Example 9

The negative active material according to Example 1, Ketjen black, and polyamideimide (PAI) in a weight ratio of 88:4:8 were mixed in an N-methyl pyrrolidone solvent, thereby preparing negative active material slurry.

The negative active material slurry was coated on a 10 µm thick copper foil, vacuum-dried at 110 °C for 15 minutes, and vacuum-cured at 350 °C for 1 hours and then roll-pressed, thereby fabricating a negative electrode.

A half coin cell (2016 R-type half cell) was fabricated according to common manufacturing processes by combining the negative electrode, lithium foil as a counter electrode, a microporous polyethylene film (Celgard 2300, thickness: 25 µm, Celgard LLC. Co.) as a separator, and a 1.5 M LiPF₆ liquid electrolyte solution prepared by mixing ethylene carbonate, diethyl carbonate, and fluoroethylene carbonate in a volume ratio of 5:70:25, and dissolving LiPF₆ therein.

### Examples 10 to 16

Each rechargeable lithium battery cell was fabricated according to the same method as Example 9 except for respectively using the negative active materials according to Examples 2 to 8 instead of the negative active material according to Example **1.**

### Comparative Example 2

A rechargeable lithium battery cell was fabricated according to the same method as Example 9 except for using the negative active material according to Comparative Example 1 instead of the negative active material according to Example 1.

### Evaluation 1: Measurement of oxygen atom amount

The negative active materials according to Examples 1 to 8 and Comparative Example 1 were each measured to determine the atomic percentage of oxygen atoms with respect to the negative active material by using an N/O analyzer (NO-436 made by LECO Co.).

In particular, 1 g of each of Examples 1 to 8 and Comparative Example 1 was put in the N/O analyzer and combusted for 40 seconds to measure the amount of oxygen atoms. Herein, CO₂ and SO₂ gases generated during the combustion were transported to an oxygen carrier gas detector. The detector marked a peak in an infrared absorption method and the area of the peak was used to calculate the amount of oxygen. The results are provided in the following Table 1.

### Evaluation 2: Scanning Electron Microscope (SEM) photograph

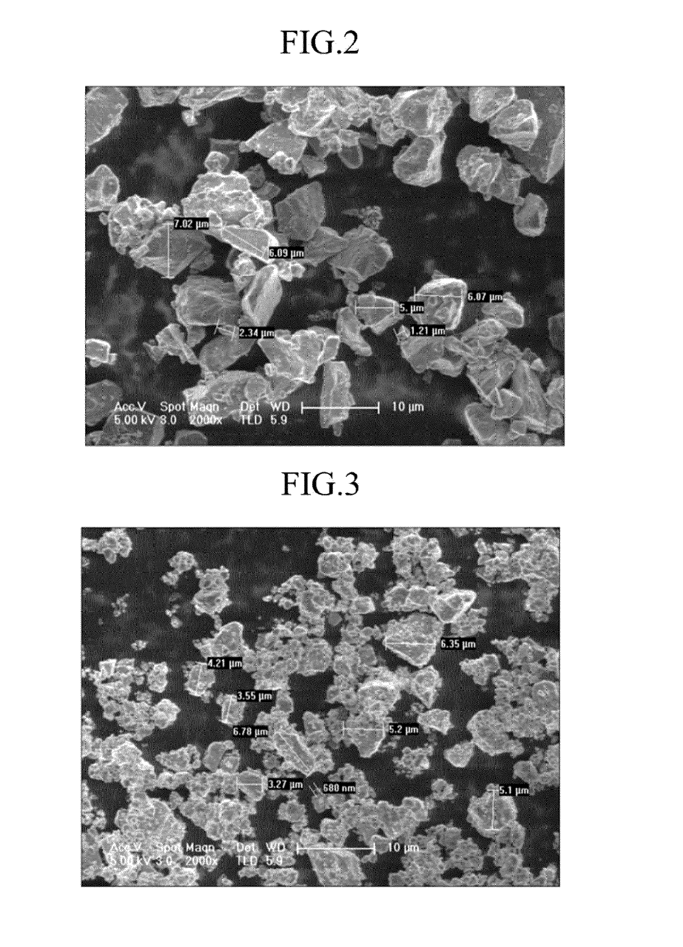

The negative active materials according to Examples 1 to 8 and Comparative Example 1 were respectively deposited on a copper grid coated with carbon. Then, a SEM photograph was taken of each sample. The results are provided in FIGS. 2 to 9. Herein, a field emission gun scanning electron microscope (FEG-SEM) JSM-6390 (JEOL Ltd.) was used.

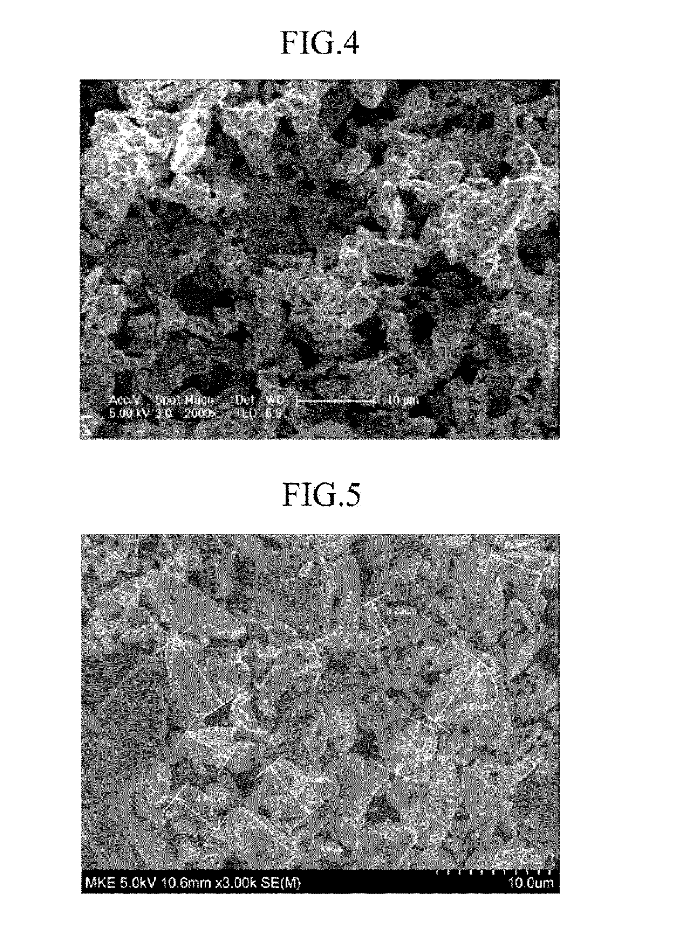

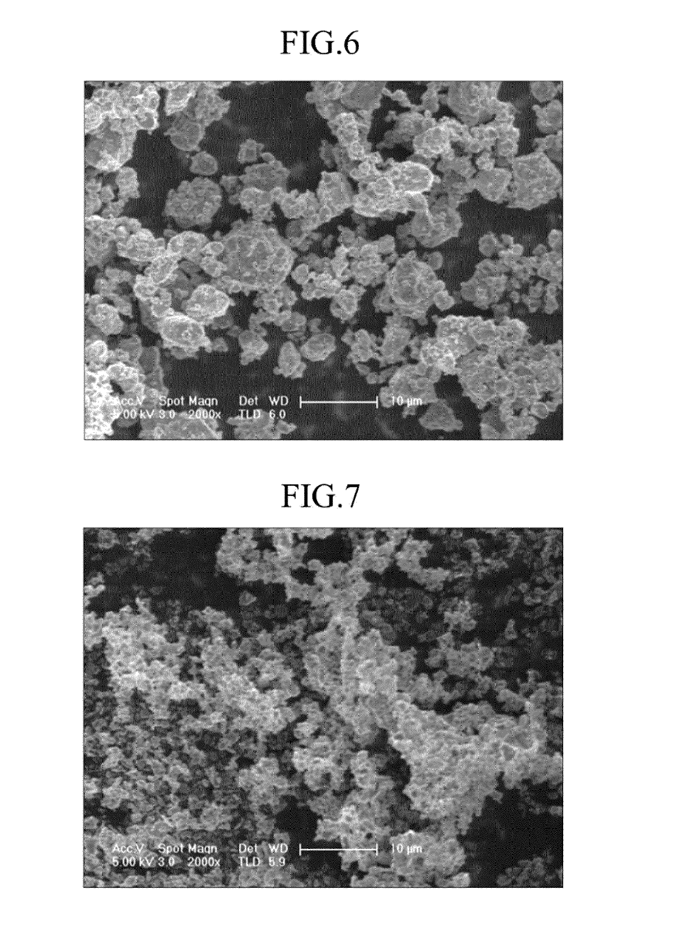

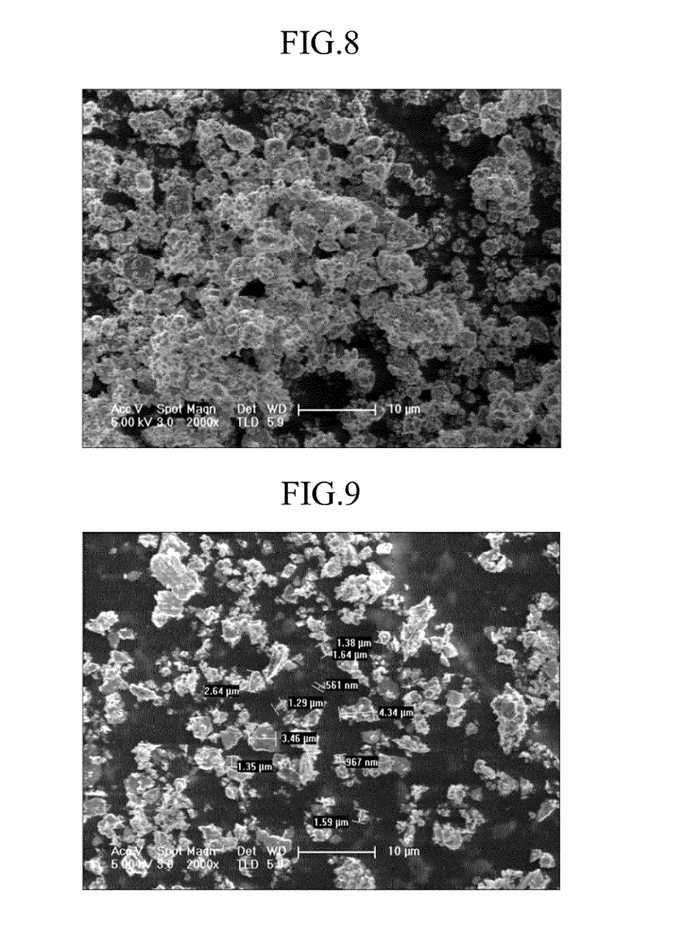

FIG. 2 is the SEM photograph of a negative active material for a rechargeable lithium battery according to Example 1, FIG. 3 is the SEM photograph of a negative active material for a rechargeable lithium battery according to Example 2, FIG. 4 is the SEM photograph of a negative active material for a rechargeable lithium battery according to Example 3, FIG. 5 is the SEM photograph of a negative active material for a rechargeable lithium battery according to Example 4, FIG. 6 is the SEM photograph of a negative active material for a rechargeable lithium battery according to Example 6, FIG. 7 is the SEM photograph of a negative active material for a rechargeable lithium battery according to Example 7, FIG. 8 is the SEM photograph of a negative active material for a rechargeable lithium battery according to Example 8, and FIG. 9 is the SEM photograph of a negative active material for a rechargeable lithium battery according to Comparative Example 1.

Referring to FIGS. 2 to 9, the shape/size of each negative active material was evaluated. The average particle diameter (D50) was measured by using Mastersizer 2000 made by Marvern Instruments Ltd. The average particle diameter (D50) of each negative active material is provided in the following Table 1.

### Evaluation 3: Measurement of Specific surface area

The negative active materials according to Examples 1 to 8 and Comparative Example 1 were respectively dried for 4 hours and measured to determine the BET specific surface area by using a nitrogen adsorption method using a ASAP 2020 made by Micromeritics Instrument Co. The results are provided in the following Table 1.

**Table 1**

| | Amount of oxygen atom (atomic%) | Average particle diameter (D50, µm) | Specific surface area (m²/g) |
|---|---|---|---|
| Example 1 | 3.33 | 4.155 | 1.6853 |
| Example 2 | 8.39 | 3.446 | 4.6185 |
| Example 3 | 12.32 | 4.781 | 2.6781 |
| Example 4 | 1.43 | 4.938 | 2.4239 |
| Example 5 | 3.57 | 5.860 | 2.4532 |
| Example 6 | 5.73 | 4.580 | 2.8392 |
| Example 7 | 17.29 | 2.192 | 4.5423 |
| Example 8 | 19.43 | 2.615 | 7.2583 |
| Comparative Example 1 | 24.23 | 2.587 | 6.4239 |

As shown in Table 1, the negative active materials according to Examples 1 to 8 included oxygen (O) atoms at less than or equal to about 20 at% based on the total number of atoms in the negative active material. On the other hand, the negative active material according to Comparative Example 1 included oxygen (O) atoms in an amount of greater than about 20 atom% based on the entire amount of all the atoms therein.

### Evaluation 4: Measurement of initial charge capacity, initial discharge capacity, and coulomb efficiency

The coin half cells according to Examples 9 to 16 and Comparative Example 2 were charged at a C-rate of 0.1 with a constant current and constant voltage (CC/CV) to a 0.01V/0.01C cut-off, and discharged at a CC to a cut-off voltage of 1.5V. Then, the half cells were measured to determine initial charge capacity, initial discharge capacity, and coulomb efficiency. The results are provided in the following Table 2.

### Evaluation 5: Cycle-life characteristic

The coin half cells according to Examples 9 to 16 and Comparative Example 2 were charged at a C-rate of 1.0 with a CC/CV to a 0.01V/0.01C cut-off, and discharged at a CC to a cut-off voltage of 1.5V 50 times. Then, the half cells were measured to determine discharge capacity and the capacity retention at the 50th cycle was calculated.

In addition, the coin half cells were measured regarding charge capacity and discharge capacity at the 50th charge and discharge cycle, and the coulomb efficiency at the 50th cycle was calculated. The results are provided in the following Table 2.

**Table 2**

| | Initial efficiency | | | Cycle-life characteristic | | | |
|---|---|---|---|---|---|---|---|
| | Initial charge capacity (mAh/g) | Initial discharge capacity (mAh/g) | Coulomb Efficiency (%) | 50^{th} charge capacity (mAh/g) | 50^{th} discharge capacity (mAh/g) | 50^{th} capacity retention (%) | 50^{th} coulomb efficiency (%) |
| Example 9 | 1249.1 | 1091.7 | 87.4 | 834.8 | 830.6 | 85.2 | 99.5 |
| Example 10 | 1356.5 | 1123.2 | 82.8 | 793.0 | 780.3 | 78.1 | 98.4 |
| Example 11 | 1299.7 | 1116.4 | 85.9 | 864.5 | 859.3 | 83.8 | 99.4 |
| Example 12 | 1250.5 | 1065.4 | 85.2 | 704.9 | 697.8 | 69.5 | 99.0 |
| Example 13 | 1248.1 | 1069.6 | 85.7 | 860.4 | 855.2 | 84.9 | 99.4 |
| Example 14 | 1278.1 | 1097.9 | 85.9 | 889.2 | 884.6 | 87.6 | 99.5 |
| Example 15 | 1202.7 | 953.7 | 79.3 | 761.7 | 750.3 | 84.1 | 98.5 |
| Example 16 | 1226.0 | 963.6 | 78.6 | 642.8 | 634.5 | 69.6 | 98.7 |
| Comparative Example 2 | 1263.1 | 953.6 | 75.5 | 122.6 | 123.0 | 13.8 | 100.4 |

As shown in Table 2, the half cells according to Examples 9 to 16 had better capacity and cycle-life characteristics than that according to Comparative Example 2.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims, and equivalents thereof.

## Claims

1. A negative active material for a rechargeable lithium battery, comprising:
particles that include a matrix comprising an Si-X based alloy, where X is not Si and is selected from the group consisting of alkali metals, alkaline-earth metals, Group 13 elements, Group 14 elements, Group 15 elements, Group 16 elements, transition elements, rare earth elements, and combinations thereof, and silicon dispersed in the matrix;
wherein the particles further include an oxide of silicon or an oxide of X, and the particles include oxygen at 20 at% or less based on the total number of atoms in the particles.

2. A negative active material according to claim 1, wherein X is selected from the group consisting of Co, Ni, Mn, Ti, Al, Fe, Mg, and Zn.

3. A negative active material according to claim 1 or 2, wherein the Si-X-based alloy is selected from the group consisting of Si-Co-based alloys, Si-Ni-based alloys, Si-Mn-based alloys, Si-Ti-Ni-based alloys, Si-Al-Fe-based alloys, Si-Al-Mn-based alloys, Si-Mg-Zn-based alloys, Si-Ti-Zn-based alloys, and combinations thereof.

4. A negative active material according to any preceding claim, wherein the particles include oxygen at 15 at% or less based on the total number of atoms in the particles, optionally wherein the particles include oxygen at 10 at% or less based on the total number of atoms in the negative active material, further optionally wherein the particles include oxygen at 5 at% or less based on the total number of atoms in the particles.

5. A negative active material according to any preceding claim, wherein the particles have an average particle diameter of 1 µm to 8 µm, optionally wherein the particles have an average particle diameter of 1 µm to 6 µm, further optionally wherein the particles have an average particle diameter of 1 µm to 4 µm.

6. A negative active material according to any preceding claim, wherein the particles have a specific surface area of 1 m²/g to 8 m²/g, optionally wherein the particles have a specific surface area of 1 m²/g to 5 m²/g, optionally wherein the particles have a specific surface area of 1 m²/g to 4 m²/g, further optionally wherein the particles have a specific surface area of 1 m²/g to 3 m²/g.

7. A negative active material according to any preceding claim, wherein the negative active material further includes a carbon-based material, optionally wherein the carbon-based material is a crystalline carbon material, an amorphous carbon material, or a combination thereof.

8. A negative active material according to claim 7, wherein the carbon-based material is included at 30 wt% to 99 wt% based on the total weight of the negative active material, optionally wherein the carbon-based material is included at 50 wt% to 99 wt% based on the total weight of the negative active material.

9. A rechargeable lithium battery comprising a negative electrode including a negative active material according to any one of claims 1 to 8.

10. A method of forming a negative active material for a rechargeable lithium battery, the method comprising:
providing a starting material comprising a matrix including an Si-X based alloy, where X is not Si and is selected from the group consisting of alkali metals, alkaline-earth metals, Group 13 elements, Group 14 elements, Group 15 elements, Group 16 elements, transition elements, rare earth elements, and combinations thereof, and silicon dispersed in the matrix;
grinding the starting material into particles, wherein the grinding of the starting material oxidises a portion of the silicon or X in the particles;
wherein the particles include oxygen at 20 at% or less based on the total number of atoms in the particles.

11. A method according to claim 10, wherein the grinding includes a process selected from the group consisting of dry ball mill processes, wet ball mill processes, paint shaker processes, attrition mill processes, air jet mill processes, planetary mill processes, and combinations thereof.

12. A method according to claim 11, wherein the grinding includes one of dry ball mill processing for 1 minute to 200 hours; wet ball mill processing for 1 minute to 40 hours; paint shaker processing for 1 minute to 2 hours; or attrition mill, air jet mill, or planetary mill processing for 1 minute to 200 hours.
